# EUROPÄISCHE PATENTANMELDUNG

(11) **EP 3 366 399 A1**
(43) Veröffentlichungstag der Anmeldung: **29.08.2018**
(21) Anmeldenummer: 18158222.2
(22) Anmeldetag: 22.02.2018
(51) Int. Cl.: B23C 3/12, B24B 23/00

(54) **ELEKTROHANDGERÄT**

(30) Priorität: 23.02.2017 DE 202017101024 U
(71) Anmelder: Baumgärtner, Peter, 73566 Bartholoma (DE)
(72) Erfinder: Baumgärtner, Peter, 73566 Bartholoma (DE)
(74) Vertreter: Fürst, Siegfried

(57) **Zusammenfassung**

Ein Elektrohandgerät (8), vorzugsweise Geradschleifer oder Einhandfräser zum Entgraten oder Anfasen von Werkstücken mittels eines rotierenden Werkzeugs, wie Fräser, Raspel oder Schleifstift, ist mit Anschlägen (6, 7) zur Positionierung und Führung des Handgerätes (8) relativ zum Werkstück (3) ausgestattet. Die Anschläge (6, 7) sind in ein und/oder mehreren Stellrichtungen (S1, S2, S3) kontinuierlich verstell- und festlegbar.Mit dieser flexiblen Einstellbarkeit der Abstände zwischen Werkzeug (1) und Werkstück (3) in Richtung der Rotationsachse (2) und/oder senkrecht zur Rotationsachse (2) können bei zeitlich wesentlich verkürzter Handhabung als beim Stand der Technik Schneidenbereiche am Werkzeug (1) ausgewählt werden, die sich sowohl hinsichtlich ihrer Position als auch ihrer Länge unterscheiden.

## Beschreibung

Die Erfindung bezieht sich auf Elektrohandgeräte, vorzugsweise Geradschleifer oder sogenannte Einhandfräser zum Entgraten oder Anfasen von Werkstücken mittels eines rotierenden Werkzeuges, wie Fräser, Raspel oder Schleifstift.

Elektrohandgeräte dieser Art sind an sich bekannt. Die Abstandshaltung des Gerätes zum Werkstück und der Vorschub während der Bearbeitung erfolgen freihändig. Um dabei ein gleichmäßiges Arbeitsergebnisses zu erzielen, werden Anschläge genutzt, die während der Bearbeitung positionierend und führend am Werkstück an liegen.

Unter der Bezeichnung "Wechselradius Entgratvorrichtung und Anfasvorrichtung" ist aus DE 103 09 706 A1 eine Vorrichtung zum Entgraten und Anfasen von Werkstücken bekannt, die über verschiedene, gegeneinander austauschbare Anschläge mit unterschiedlichen Radien verfügt. Diese Anschläge sind jeweils mittels Schraubverbindungen so an der Vorrichtung zu befestigen, dass der Mittelpunkt der Radien stets auf der Rotationsachse des Entgrat- bzw. Anfaswerkzeuges, namentlich eines Fräsers, liegt.

Der Zweck besteht in einer stabilen Handhabung der Vorrichtung, zugleich soll mit dem Austauschen der Anschläge mit unterschiedlichen Radien das Abnutzen der Fräserschneide auf ihrer gesamten Länge ermöglicht werden.

Während diese Anschläge den Abstand zwischen Werkzeug und Werkstück senkrecht zur Rotationsachse des Werkzeugs bestimmen, wirkt eine mit dem Grundköper der Vorrichtung fest verschraubte Grundplatte als Anschlag in Richtung der Rotationsachse, und zwar mit unveränderlichem Abstand.

Der Nachteil dieser Anordnung besteht darin, dass die Umrüstung dieser Vorrichtung in Bezug auf die Abstandsänderung senkrecht zur Rotationsachse wegen des dazu erforderlichen körperlichen Austausches der Anschläge verhältnismäßig aufwendig und die Möglichkeit einer Umrüstung durch Abstandsänderung in Richtung der Rotationsachse überhaupt nicht vorgesehen ist.

Von diesem Stand der Technik ausgehend liegt der Erfindung die Aufgabe zugrunde, ein Elektrohandgerät zu schaffen, das diesen Mangel nicht mehr aufweist, sondern bezüglich der Vorgabe verschiedener Schneidenbereiche zur Nutzung bei der Werkstückbearbeitung wesentlich flexibler ist.

Erfindungsgemäß ist das Elektrohandgerät ausgestattet mit Anschlägen zur Positionierung und Führung des Gerätes relativ zum Werkstück, wobei ein erster Anschlag zur Bestimmung des Abstandes zwischen Werkzeug und Werkstück in Richtung der Rotationsachse des Werkzeuges und ein zweiter Anschlag zur Bestimmung des Abstandes zwischen Werkzeug und Werkstück senkrecht zur Richtung der Rotationsachse vorgesehen sind, und wobei Mittel zur Variation des Abstandes zwischen Werkzeug und Werkstück durch Verschiebung mindestens des ersten Anschlages vorhanden sind. Vorzugsweise bilden die Anschläge und die Mittel zur Variation der Abstände eine Führungseinheit.

Mit der Möglichkeit der Variation des Abstandes zwischen Werkzeug und Werkstück in Richtung der Rotationsachse durch Verschiebung des ersten Anschlages können bei zeitlich wesentlich verkürzter Handhabung als beim Stand der Technik Schneidenbereiche ausgewählt werden, die sich sowohl hinsichtlich der Position als auch der Länge unterscheiden.

Bei einer bevorzugten Ausführungsform ist die Verschiebung des ersten Anschlages mittels eines Gewindetriebes vorgesehen, wobei die Verschiebeweite von der Gewindesteigung, Drehrichtung und der Anzahl der Umdrehungen eines Getriebegliedes abhängig und so der Abstand zwischen Werkzeug und Werkstück in Richtung der Rotationsachse des Werkzeuges variierbar ist.

Bei einer weiteren bevorzugten Ausführungsform ist der zweite Anschlag ebenfalls in Richtung der Rotationsachse des Werkzeuges verschiebbar angeordnet. So kann die Position des zweiten Anschlags an Werkstücke unterschiedlicher Abmessungen in Richtung der Rotationsachse angepasst werden. Dabei ist es von Vorteil, den zweiten Anschlag an seinem dem Werkzeug zugewandten Bereich mit einer Aussparung zu versehen, die zentrisch zur Rotationsachse positioniert ist und den Verschiebebereich insofern erweitert, als das Werkzeug zumindest teilweise in den zweiten Anschlag eintauchen kann.

Optional wird eine weiterhin vereinfachte Umrüstung in Bezug auf die Positionsanpassung der beiden Anschläge mit einer Zwangskopplung der Verschiebung von erstem und zweitem Anschlag in Achsrichtung erzielt. So ist mit nur einem Handgriff die Verschiebung beider Anschläge gemeinsam ausführbar.

Die Zwangskopplung wird beispielsweise erreicht, indem der zweite Anschlag mit demselben Getriebeglied verbunden ist, mit dem auch der erste Anschlag verschiebbar ist. Bei dieser Ausführungsform ist es vorteilhaft, wenn der zweite Anschlag nicht fest, sondern um die Rotationsachse verdrehbar auf dem betreffenden Gewindeglied sitzt. Damit kann durch Gegendrehen des zweiten Anschlags gegen die Drehrichtung, mit der das Gewindeglied zwecks Anschlagverschiebung gedreht wird, die Grundausrichtung des zweiten Anschlags senkrecht zur Rotationsachse beibehalten werden.

Bei den bisher beschriebenen Ausführungsformen ist der zweite Anschlag lediglich in Achsrichtung verschiebbar. In den Erfindungsgedanken eingeschlossen sind jedoch auch Ausführungsformen, bei denen Mittel zur zusätzlichen Verschiebung des zweiten Anschlages senkrecht zur Richtung der Rotationsachse vorgesehen sind, beispielsweise in Form einer Geradführung.

Ein weiterer Vorteil des Gegenstandes der Erfindung ist für den Benutzer des Elektrohandgeräts das schnelle Anschleifen von Kanten an Innen- und Außenkonturen von Gegenständen, da bei dem handgeführten Anlegen des Werkzeuges an das Werkstück der sich quasi automatisch drehende Anschlag selbsttätig jeder Kantenkontur anpasst.

Zudem kann bei einem Abrutschen des Werkzeuges vom Werkstück - aus Unvorsichtigkeit des Anwenders oder aus anderen Gründen - das Werkstück nicht beschädigt werden; die durch das Werkzeug an der betreffenden Kante des Werkstückes erzeugte Fase kann in einem solchen Fall nur kleiner werden, also nicht größer und kann somit durch erneutes Anlegen des Werkzeuges korrigiert werden.

Die Erfindung wird nachfolgend anhand von in den Zeichnungen gezeigten schematischen Darstellungen und anhand eines Ausführungsbeispiels näher und in weiteren Details erläutert, welche die Erfindung jedoch nicht einschränken. Es zeigen:
- Fig.1a und Fig. 1b: eine Darstellung des Prinzips der Erfindung;
- Fig.2: eine konkretisierte Ausgestaltung der Erfindung anhand eines Geradschleifers.

Zunächst wird vorausgeschickt, dass Begriffe wie "links", "rechts", "oben" oder "unten", vorn und hinten sich lediglich auf die Darstellung in den Figuren beziehen, aber von der tatsächlichen Anordnung in der Praxis abweichen können. Weiterhin wird darauf hingewiesen, dass die Figuren keine reinen technischen Zeichnungen sind, weshalb teilweise Schraffuren und Abbruchlinien fehlen. Zudem können die relativen Dimensionen von der Wirklichkeit abweichen. In der Beschreibung nicht erwähnte Bezugszeichen ergeben sich aus der Bezugszeichenliste. Die Bezugszeichen haben in allen Figuren die gleiche Bedeutung.

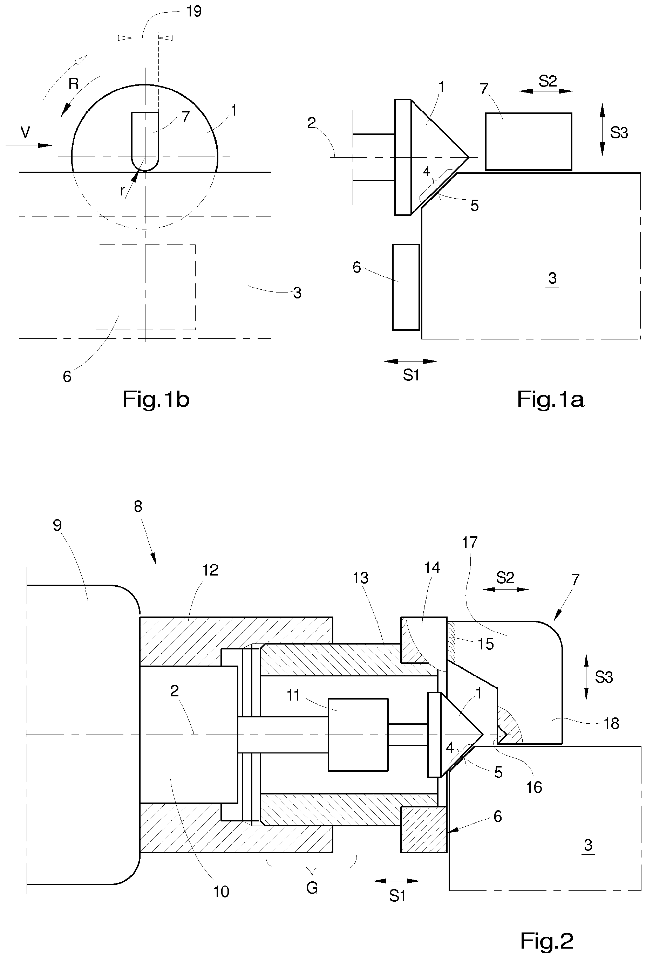

In den Figuren 1a und 1b ist der Übersichtlichkeit halber lediglich ein Werkzeug 1 in Form eines 45-Grad-Fräsers dargestellt, der um eine Achse 2 rotierend mit einem Elektrohandgerät (nicht dargestellt) verbunden ist, um ein Werkstück 3 anzufasen.

Wie aus Fig.1a ersichtlich, steht ein der beabsichtigten Fase 5 entsprechender Schneidenbereich 4 des Werkzeugs 1 mit dem Werkstück 3 in Eingriff. Das Werkstück 3 erstreckt sich in die Zeichenebene hinein. Somit erfolgt auch der Vorschub des Fräsers 1 in die Zeichenebene hinein, wobei das Elektrohandgerät mit dem Werkzeug 1 von Hand nach hinten vorgeschoben wird. Um mit dem Vorschub eine gleichmäßig breite Fase 5 zu erzielen, sind Anschläge 6 und 7 vorhanden, die am Werkstück 3 gleitend anliegen und so der Führung des Elektrohandgerätes relativ zum Werkstück 3 dienen.

Fig.1b zeigt die in Fig.1a dargestellte Konfiguration in einer Ansicht mit Blick in Richtung der Rotationsachse 2. Anschlag 6 ist vom Werkstück 3 verdeckt und Anschlag 7 in einer weiteren Seitenansicht zu sehen. Die Rotationsrichtung R und die Vorschubrichtung V sind durch Pfeile kenntlich gemacht. Der Radius "r" im Kontaktbereich zwischen Anschlag 7 und Werkstück 3 ermöglicht die Führung auch an Werkstückkonturen, die von der dargestellten geraden Werkstückoberfläche abweichen. Daher soll der Mittelpunkt des Radius "r" vorzugsweise in der Rotationsachse 2 liegen.

Wie eingangs erwähnt, besteht ein wesentlicher Nachteil des Standes der Technik darin, dass eine Veränderung der Anschlagspositionen zwecks Nutzung verschiedener Schneidenbereiche 4 entweder gar nicht möglich oder zumindest sehr zeitaufwendig ist, wenn feste Verbindungen erst gelöst und Anschläge gegeneinander ausgetauscht werden müssen.

Davon ausgehend ist erfindungsgemäß vorgesehen, die Anschläge 6, 7 variabel in Relation zum Werkzeug 1 mit dem Elektrohandgerät so zu verbinden, dass ihre Positionen relativ zum Werkzeug 1 schnell und unkompliziert an veränderte Aufgaben anpassbar sind, vorzugsweise durch die Möglichkeit der Verschiebung in den mit Pfeilen gekennzeichneten Stellrichtungen S1, S2 und S3.

Diesbezüglich zeigt Fig.2 ein Beispiel einer konkreten Ausführung der Erfindung in Gestalt eines Geradschleifers 8, welcher ein Gehäuse 9, einen Spannhals 10 und ein Spannfutter 11 zur Aufnahme des Werkzeugs 1 aufweist sowie eine neue Führungseinheit zum Führen des Werkzeuges 1 am Werkstück 3. Das Werkzeug 1, die Rotationsachse 2, das Werkstück 3, der Schneidenbereich 4, die durch Bearbeitung am Werkstück 3 erzeugte Fase 5 sowie die Anschläge 6 und 7 befinden sich hier im gleichen, bereits anhand Fig.1 erläuterten Wirkungszusammenhang.

Auf dem Spannhals 10 ist eine Buchse 12, welche Bestandteil der neuen Führungseinheit ist, angeordnet, die zum Beispiel infolge einer zwischen dem Spannhals 10 und der Buchse 12 abgestimmten Übergangspassung unter geringem Druck per Hand auf den Spannhals 10 aufschiebbar oder, in anderer an sich bekannter Weise, durch eine Klemm- oder Stiftverbindung mit dem Spannhals 10 verbunden ist.

Im Bereich G ist die Buchse 12 mit Innengewinde versehen, und in den Bereich G ist, wie ersichtlich, eine mit Außengewinde versehene zweite Buchse 13, welche ebenfalls Bestandteil der neuen Führungseinheit ist, hineingedreht. Mit der Verdrehung der zweiten Buchse 13 gegen die erste Buchse 12 werden in Abhängigkeit von Gewindesteigung, Drehrichtung und Anzahl der Umdrehungen die Stellrichtungen S1 generiert.

An ihrem aus der ersten Buchse 12 herausragenden Endabschnitt ist auf die zweite Buchse 13 per Gleitpassung ein Stellring 14, welcher Bestandteil der neuen Führungseinheit ist, aufgesetzt, der gemeinsam mit der Buchse 13 in den Stellrichtungen S1 bewegt wird, jedoch aufgrund der Gleitpassung gegen die Buchse 13 um die Rotationsachse 2 verdrehbar ist. Die Verbindung zwischen dem Stellring 14 und dem Endabschnitt der zweiten Buchse 13 ist sozusagen ein Drehgelenk.
Der Bereich der Stirnfläche des Stellrings 14 unterhalb der Rotationsachse 2 bildet den Anschlag 6.
Nach einer möglichen, in der Zeichnung nicht gezeigten Ausführungsvariante ist der Stellring 14 in axialer Richtung fixiert.

Am Stellring 14 oberhalb der Rotationsachse 2 ist der Anschlag 7 angebracht, hier beispielsweise mittels einer nicht lösbaren Verbindung, einer Schweißverbindung 15. Grundsätzlich nimmt der Anschlag 7 an der Verschiebung in den Stellrichtungen S1 teil, ist also mit der Bewegung des Anschlages 6 zwangsgekoppelt.

Der Anschlag 7 besteht in dem gezeigten Ausführungsbeispiel aus einem Pfeiler 17 und einem zu der Rotationsachse 2 hin ragenden Arm 18. Der Pfeiler 17 und der seitwärts weg ragende Arm 18 sind hier zudem einstückig.
Optional kann der Anschlag 7, in dem gezeigten Ausführungsbeispiel eine zum Werkzeug 1 zeigende Fläche des Armes 18, mit einer Aussparung 16 versehen sein, die den Verschiebebereich erweitert, indem das Werkzeug 1 teilweise in den zweiten Anschlag 7, also in die Aussparung 16, eintauchen kann.

Die Buchse 12, die Buchse 13, der Stellring 14 und die Anschläge 6 und 7 bilden hier die neue Führungseinheit des handführbaren Geradschleifers 8.

Mit der so geschaffenen Möglichkeit der stufenlosen Verschiebung der Anschläge 6 und 7 in Richtung der Rotationsachse 2 können bei zeitlich wesentlich kürzerer Handhabung als beim Stand der Technik Schneidenbereiche 4 ausgewählt werden, die sich sowohl hinsichtlich ihrer Position als auch ihrer Länge unterscheiden.

Bei der anhand Fig.2 beschriebenen Ausführungsform ist Anschlag 7 lediglich in Achsrichtung verschiebbar. Es sind jedoch ausdrücklich auch erfindungsgemäße Ausführungsformen möglich, bei denen Mittel zur Verschiebung des Anschlages 7 in Achsrichtung - also in den Stellrichtungen S2 - unabhängig von der Verschiebung des Anschlages 6 und/oder auch Mittel zur zusätzlichen Verschiebung des Anschlages 7 senkrecht zur Rotationsachse 2 - also in den Stellrichtungen S3 - vorgesehen sind.

Des Weiteren ist es denkbar und liegt im Rahmen der Erfindung, den Anschlag 7 anstelle einer Schweißverbindung 15 über eine Geradführung mit dem Stellring 14 zu verbinden. Diese Geradführung ist eine zeitweilig lösbare Verbindung.
Je nach Anordnung und Lage der Geradführung wird eine Verschiebung des Anschlages 7 in den Stellrichtungen S3 oder den Stellrichtungen S2 ermöglicht. Die Geradführung kann auch als Kreuzführung ausgeführt sein, sodass eine Verschiebung in den Stellrichtungen S3 und/oder in den Stellrichtungen S2 ermöglicht ist.

Zudem ist es denkbar und liegt im Rahmen der Erfindung, den Anschlag 7 als Austauschelemente in verschiedenen Größen und Formen auszuführen, wobei wahlweise jeweils eines der Austauschelemente über eine lösbare Verbindung an dem Stellring 14 positioniert und fixiert werden kann.

Zu der Erfindung gehört auch eine nicht in den Zeichnungen gezeigte Ausführungsvariante, bei der der Radius "r" größer ist als die Dicke 19 des Anschlages 7, sodass der in Bezug auf den Radius "r" am Anschlag 7 gebildete Kreisbogen länger ist, als der Kreisbogen des sich ergebenden Halbkreises. Die Dicke 19 ist in der Fig. 1b mit strichpunktierten Linien markiert, weil es nur eine Ausführungsvariante ist.
Hierdurch ergeben sich weitere Vorteile für die Führung des handgeführten Geradschleifers 8 an kritischen Kantenbereichen des Werkstückes 3, wie z.B. die Ecken von aufeinander stoßenden Innenkanten oder wie Einbuchtungen an Außen- oder Innenkanten und dergleichen mehr.

Die in Figur 2 gezeigte neue Führungseinheit für ein Elektrohandgerät nach der Erfindung, insbesondere für einen Geradschleifer (8) oder für eine Einhandfräse oder dergleichen handführbares Gerät, kann auch als sogenannte Nachrüsteinheit, also als Zubehör für bereits hergestellte oder bereits in Benutzung befindliche Elektrohandgeräte verwendet werden; hierzu ist lediglich der betreffende Aufnahmebereich der ersten Buchse an die Gegebenheiten anzupassen; in der Regel hat der Spannhals solcher Geräte ein genormtes Maß.

Alle in der vorstehenden Beschreibung erwähnten sowie auch die nur allein aus der Zeichnung entnehmbaren Merkmale sind weitere Bestandteile der Erfindung, auch wenn sie nicht besonders hervorgehoben und insbesondere nicht in den Ansprüchen erwähnt sind.

### Bezugszeichenliste

- 1: Werkzeug
- 2: Rotationsachse
- 3: Werkstück
- 4: Schneidenbereich
- 5: Fase
- 6: Anschlag (erster Anschlag)
- 7: Anschlag (zweite Anschlag)
- 8: Geradschleifer
- 9: Gehäuse
- 10: Spannhals
- 11: Spannfutter
- 12: Buchse (äußere Buchse, erste Buchse)
- 13: Buchse (innere Buchse, zweite Buchse)
- 14: Stellring
- 15: Schweißverbindung
- 16: Aussparung
- 17: Pfeiler
- 18: Arm
- 19: Dicke

- G: Gewindebereich
- R: Rotationsrichtung
- V: Vorschubrichtung
- S1: Stellrichtungen
- S2: Stellrichtungen
- S3: Stellrichtungen
- r: Radius

## Patentansprüche

1. Elektrohandgerät, insbesondere Geradschleifer (8) zum Entgraten oder Anfasen von Werkstücken (3) mittels eines rotierenden Werkzeuges (1), ausgestattet mit Anschlägen (6, 7) zur Positionierung und Führung des Handgerätes relativ zum Werkstück (3), wobei
ein erster Anschlag (6) zur Bestimmung des Abstandes zwischen Werkzeug (1) und Werkstück (3) in Richtung der Rotationsachse (2) des Werkzeuges (1), und
ein zweiter Anschlag (7) zur Bestimmung des Abstandes zwischen Werkzeug (1) und Werkstück (3) senkrecht zur Rotationsachse (2) vorgesehen sind, und wobei
Mittel zur Variation des Abstandes zwischen Werkzeug (1) und Werkstück (3) durch Verschiebung mindestens des ersten Anschlages (6) vorhanden sind.

2. Elektrohandgerät nach Anspruch 1, bei dem die Verschiebung des ersten Anschlages (6) mittels Gewindetrieb vorgesehen ist.

3. Elektrohandgerät nach Anspruch 1 oder 2, bei dem der zweite Anschlag (7) in Richtung der Rotationsachse (2) verschiebbar angeordnet ist.

4. Elektrohandgerät nach Anspruch 3, bei dem der zweite Anschlag (7) in seinem dem Werkzeug (1) zugewandten Bereich eine zentrisch zur Rotationsachse (2) positionierte Aussparung (16) aufweist.

5. Elektrohandgerät nach Anspruch 3 oder 4, bei dem die Verschiebungen beider Anschläge (6, 7) zwangsgekoppelt sind.

6. Elektrohandgerät nach einem der Ansprüche 1 bis 5, bei dem der zweite Anschlag (7) um die Rotationsachse (2) verdrehbar angeordnet ist.

7. Elektrohandgerät nach einem der vorgenannten Ansprüche, bei dem Mittel zur Verschiebung des zweiten Anschlages (7) senkrecht zur Rotationsachse (2) vorhanden sind, vorzugsweise in Form einer Geradführung.

8. Führungseinheit für ein Elektrohandgerät, insbesondere einen Geradschleifer (8) zum Entgraten oder Anfasen von Werkstücken (3) mittels eines rotierenden Werkzeuges (1), wobei die Führungseinheit ausgestattet ist mit Anschlägen (6, 7) zur Positionierung und Führung des Handgerätes relativ zum Werkstück (3) sowie einem Befestigungsmittel zur Anordnung der Führungseinheit an dem Elektrohandgerät, und bei der ein erster Anschlag (6) zur Bestimmung des Abstandes zwischen Werkzeug (1) und Werkstück (3) in Richtung der Rotationsachse (2) des Werkzeuges (1), und
ein zweiter Anschlag (7) zur Bestimmung des Abstandes zwischen Werkzeug (1) und Werkstück (3) senkrecht zur Rotationsachse (2) vorgesehen sind, und
bei der Mittel zur Variation des Abstandes zwischen Werkzeug (1) und Werkstück (3) durch Verschiebung mindestens des ersten Anschlages (6) vorhanden sind, und
bei der eines der Mittel zur Variation des besagten Abstandes zugleich das Befestigungsmittel zur lösbaren Befestigung der Führungseinheit an dem Elektrohandgerät aufweist.

9. Führungseinheit nach Anspruch 8, bei der das Element zur lösbaren Befestigung der Führungseinheit derart ist, dass es bei bestimmungsgemäßer Verwendung an einem Spannhals (10) des Elektrohandgeräts angeordnet werden kann.

10. Führungseinheit nach Anspruch 8 oder 9, bei der bei bestimmungsgemäßer Verwendung die Mittel zur Variation des besagten Abstandes zwischen Werkzeug (1) und Werkstück (3) konzentrisch zur Rotationsachse (2) des Werkzeuges (1) angeordnet sind.
